(19)

Europäisches
Patentamt
European
Patent Office
Office européen
des brevets

(11) **EP 4 592 919 A1**

(12) **EUROPEAN PATENT APPLICATION**

(43) Date of publication:
**30.07.2025  Bulletin 2025/31**

(21) Application number: **24154224.0**

(22) Date of filing: **26.01.2024**

(51) International Patent Classification (IPC):
**G06Q 10/0639** (2023.01)     **G06Q 10/0835** (2023.01)

(52) Cooperative Patent Classification (CPC):
**G06Q 10/06393; G06Q 10/08355**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **IESG Technologies Limited
Fotan, Shatin, N.T. (HK)**

(72) Inventors:
• **AU,, Wai Kwong Elvis
  Shatin, N.T. (HK)**
• **CHAU,, Shun Yin
  Shatin, N.T. (HK)**
• **WONG,, Siu Fai
  Shatin, N.T. (HK)**

(74) Representative: **Potter Clarkson
Chapel Quarter
Mount Street
Nottingham NG1 6HQ (GB)**

(54)     **A SYSTEM AND METHOD FOR CARBON FOOTPRINT CALCULATIONS IN MULTI-OBJECTIVE SOURCES, LOGISTICS AND PRODUCTION ENVIRONMENTS**

(57)     A method and system for calculating and optimizing carbon footprint of a product life cycle are disclosed. A graph method is used to account for the carbon emission on the complicated connecting the product life cycle. A well formulate set of equations are used to optimize the process to reduce overall carbon footprint. Unlike the traditional accounting method, in which human beings are needed to understand fully regarding each of the details of the carbon accounting method, the present system uses an assistant AI to compensate for the insufficient knowledge in the carbon accounting.

FIG. 1

**EP 4 592 919 A1**

**Description**

FIELD

The present disclosure relates in general to the field of greenhouse gas (GHG) carbon accounting, and techniques for reducing carbon footprint in the product life cycle, which optimize the processes including the route of the movement of inventory through the chain.

BACKGROUND

GHG accounting has become ever more important in the current era. From individual product life cycle to company-wise reporting. Companies are interested in accounting the root of carbon emission and performing relevant carbon reduction to maintain a sustainable development.

In many companies, there is usually a lack of workforce to have enough knowledge to calculate the carbon footprint. An experienced person in the carbon accounting may be used to calculate the total company-wise carbon footprint based on financial report. However, it is less trivial to calculate the individual carbon footprint of a single product base on its product life cycle. It is useful to know what embodies carbon of individual product such that the company can have an understanding of the root of the major carbon footprint in its operation, and to provide a cradle-to-gate emission factor for the next user to better account for the subsequent carbon emission.

It is on one hand a goal to reduce the total carbon emission, as a result from business operation. On the other hand, financial cost is also an important factor to consider for a sustainable business. There is usually a gap in connecting these two factors together, and as a result of most companies focus on reducing one factor and substantially increase the other factor, which is usually a bad choice.

In a more advanced scenario, companies would prefer to reduce the carbon footprint that they have generated. This is usually done by recalculating the carbon footprint in the next financial year and compare to the previous one to check how much have been reduce. A pre-estimated of carbon footprint is usually not available due to lack of data for the transportation between different factory.

SUMMARY

In one aspect, the present disclosure relates to a system and method for autonomous calculation of carbon footprint based on the target product life cycle, and to optimize a route based on the compatibility data for the intermediate factory location.

In another aspect, the present disclosure relates to a system and method for providing a recommendation for carbon accounting in the product life cycle. Unlike traditional spreadsheet type carbon accounting, in which human beings decide relevance and/ or carbon accounting method, e.g. supplier-specific method, average-data method, and spend-based method, the AI-based carbon accounting system of the present disclosure suggests a possible method based on the user data availability, as well as provides a default value by maintaining a historical data cache to a similar input.

To achieve the above-mentioned aspects, the system to calculate a carbon footprint for a product life cycle includes a user interface for a user to input required information; a calculation module to calculate and optimize the carbon footprint for an input network; a distance estimate interface for calculating a route distance between factories; and an assistant AI component for an intelligent guide to the user inputting and caching data. Whereas the method for calculating a carbon footprint for a product life cycle includes inputting information by a user through a user interface; calculating and optimizing the carbon footprint for an input network through a calculation module; calculating a route distance between factories through a distance estimate interface; and inputting and caching data by the user with an intelligent guide through an assistant AI component.

In the system and method to calculate the carbon footprint for the product life cycle, the calculation module is based on a calculation method for a construction of a network propagation. In particular, the calculation module can perform a route optimization based on the carbon footprint and a financial cost constraint, and can be a further constraint to network node weights by a user input to fix logistic paths during operation. Additionally, routes include mixing classes of shipping and vehicle assets; the distance estimate interface performs a multi-route finding; and the assistant AI component includes a memory database for automatically filling up of historical data, including a factory node and a corresponding local carbon footprint. In addition, the assistant AI component performs one or more analyses market information and reports to provide recommendations on different possible methods and parameters to the user to optimize the flow, GHG/carbon emission and financial cost.

Further included in the system and method to calculate the carbon footprint for the product life cycle are finding a distance, time travel, and financial cost for each vehicle mode corresponding to each of the routes, and using a programmed logic to request the user for inputting necessary data from most accurate to less accurate based on available data from the user.

BRIEF DESCRIPTION OF DRAWINGS

For a more complete understanding of the present disclosure, reference is made to the following description and accompanying drawings, in which:

FIG. 1 is a schematic diagram of a system according to exemplary embodiments of the disclosed subject matter;
FIG. 2 is an example showing a typical transit route from one factory to another factory;
FIG. 3 is an example showing the full connecting of a product life cycle logistic network;
FIG. 4 is an example showing the connecting between 2 layers of a product life cycle logistic network; and
FIG. 5 is an example network to demonstrate how the optimized weight can be used for further analysis.

DETAILED DESCRIPTION OF THE EXEMPLARY EMBODIMENTS

Disclosed are systems and methods for the optimization of supply and distribution chain with respect to carbon footprint accounting minimization, taking the balance with respect to the financial cost. Although the present embodiments have been described with reference to specific example embodiments, it will be evident that various modifications and changes may be made to these embodiments without departing from the broader spirit and scope of the various embodiments. In addition, the components shown in the figures, their connections, couples, and relationships, and their functions, are meant to be exemplary only, and are not meant to limit the embodiments described herein.

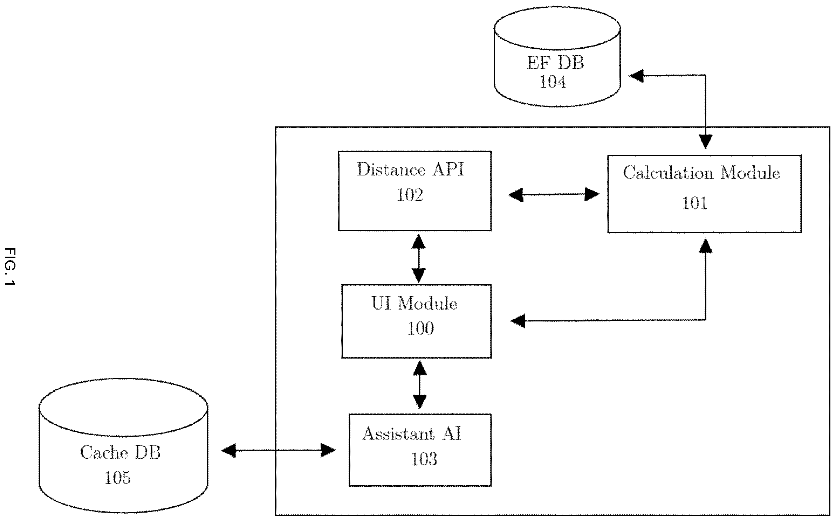

FIG. 1 shows a schematic diagram of the system. A user using the system through the interaction with an UI module **100**. The UI module **100** is connected to a distance estimated API module **102** to validate the user location input. An Assistant AI module **103** is also connected to the UI module **100** to help user finding correct value to input in case there is any misunderstanding. After all the data is collected from the user, the data are sent to a calculation module **101** for a backend calculation. The calculation module **101** queries some distance information from the distance estimated API module **102,** and obtain emission factor value from an emission factor database **104.** A cache database **105** is connected to the Assistant AI module **103** to record users' input and to retrieve past data for quick auto-filling in the future use.

In the UI module **100,** the user first chooses what product to be accounted for the product life cycle. Then the user inputs a possible valid location of intermediate factories and source locations. For each factory, the user requires to input expected output volumes and required input materials to produce that output. The expected output volumes also represent the maximum capacity of the specific elements that can be generated by that factory. The system is designed specifically for accounting the product life cycle, and is able to ask the user to input the carbon footprint for the relevant categories in GHG.

In the Assistant AI module **103,** several carbon footprint accounting methods are preprogrammed to guide the users of correct input depending on their availability of information. Accounting methods can vary from a more accurate method such as supplier-specific method to a least accurate method such as the spend-based method. The Assistant AI module **103** performs one or more analyses of market information and reports to provide recommendations on different possible methods and parameters to the user to optimize the flow, GHG/carbon emission and financial cost.

The emission factor database **104** stores most of the emission factor values to help the user to account for the cradle-to-gate carbon footprint. This can reduce the effort for the user to search the necessary emission factor from the internet. Any subsequent products in the life cycle are calculated in the calculation module **101.** Details on the calculation method for calculation module **101** will be discussed later.

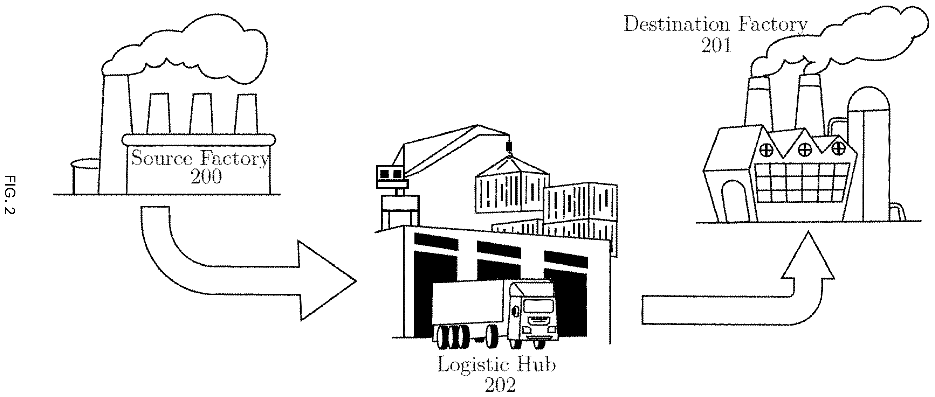

FIG. 2 shows a typical transit connection from one factory to another factory for a product life cycle involving multiple factories. Some intermediate products are produced at a source factory **200** and transport to a destination factory **201** through a logistic hub **202.**

The logistic hub **202** can be multiple combinations of carriers and classes or modes of transit. It could include a combination of land, air, and/ or sea modes. The transportation route and the distance transfer by each shipping or transportation method through the logistic hub **202** can be calculated by the distance estimated API module **102.** A typical possible route can be starting from the source factory **200,** then transport to the nearest sea port through land connection. After that, it is transport via ship to the sea port near to the destination factory **201.** Finally transfer to the destination factory **201** through land connection.

Given that there may exist route restriction at certain location/ or cost constraint on transportation, the distance estimated API module **102** can suggest multiple possible routes for the user to choose. The associated financial cost and the time required for the total transportation are calculated for comparison.

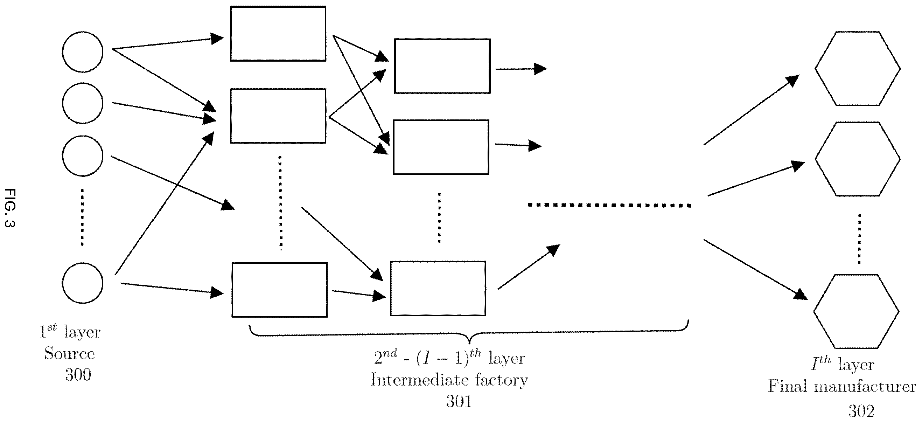

FIG. 3 shows a typical full logistic network of a product life cycle. Materials as the source is delivered from 1-st source layer 300 with a given emission factor (i.e., found in the emission factor database **104)** to account for the cradle-to-gate carbon footprint. Then it is delivered to different manufacture factories located in different countries for the first processing in the second layer of the network. Any outputs from the factories can be further send to other factories for a next step processing which form a series of network for the intermediate products logistic in intermediate layer **301.** The final products are produced and output in the final output layer **302.**

As a pre-estimated for carbon footprint optimization, there can be multiple factories located at different places in the same layer taking the same input materials and output the same products. This is demonstrated in the first two factories of the 3-rd layer as shown in FIG. 3. The final layer can be either factory or retail stores depend on the coverage in accounting of the upstream transport.

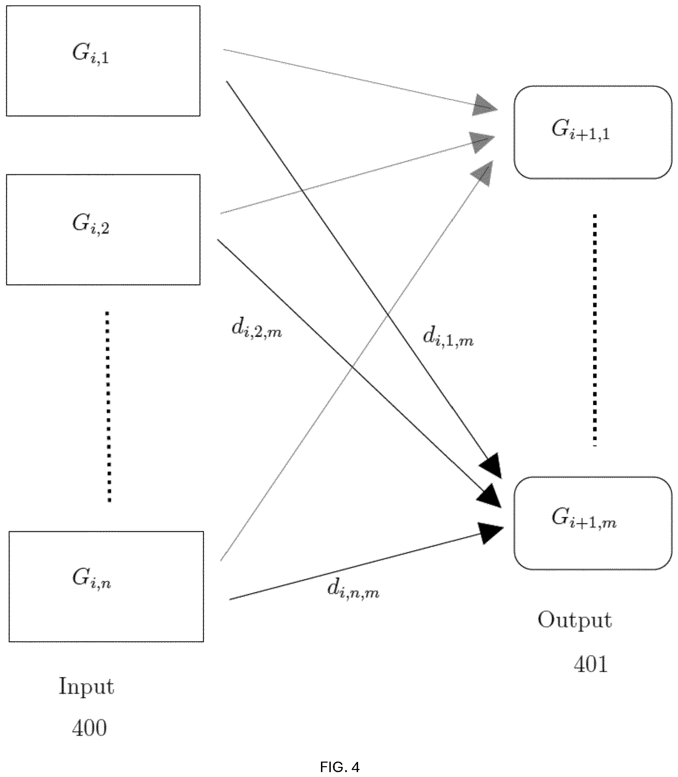

FIG. 4 shows a typical connection between layers in the logistic network shown in FIG. 3. It can also consider as a simplify version of FIG. 2 except that the logistic hub is not shown in FIG. 4. Either source of raw materials obtained or intermediate products produced at the factory of an input layer **400.** Each factory in the input layer **400** can calculate an accumulate carbon footprint $G_{i,j}$ which account all the upstream carbon footprint up to the production at that factory. The materials are then send to the next factory in an output layer **401** through some traffic connections (the logistic hub **202** show in FIG. 2) associated with the total carbon footprint of $d_{i,j,k}$ which is calculated from the distance estimated API module **102.**

In a typical factory of a single layer, the factory produces at least one product or intermediate product with a maximum capacity of amount $o_{t,i,j}$, where the subscript t is used as identifier of the product produced (a unique number for each material), i means the i-th layer of the logistic network, and j is the j-th factory in the i-th layer. Similarly, a factory requires sources with amount $s_{t,i,j}$ to manufacture the products, where the subscript t is the identifier for the sources required (same identify t is used to source and output for same material), and i, j means the i-th layer of the j-th factory.

Denote $G_{i,j}$ be the cradle-to-gate carbon footprint of the product produced at the i-th layer of the j-th factory. Denote $d_{i,j,k}$ be the carbon footprint of upstream transportation sending all the output from the i-th layer of j-th factory to the (i+1)-th layer of k-th factory.

Then the carbon emission can be propagated through the network govern by the equation:

$$G_{i,j,k} = \sum_j w_{i,j,k}\left(G_{i,j} + d_{i,j,k}\right) + L_{i+1,k} \qquad (1)$$

Where $w_{i,j,k}$ is the weight of sending materials from the i-th layer j-th factory to (i+1)-th layer k-th factory that satisfy the constraint:

$$s_{t,i+1,k} = \sum_j w_{i,j,k} o_{t,i,j} \qquad (2)$$

$$\sum_k w_{i,j,k} \leq 1 \qquad (3)$$

$w_{i,j,k}$ can also be interrupted as the parentage to divide the output from i-th layer j-th factory to the (i+1)-th layer. Therefore, $w_{i,j,k}$ can only takes a value of between 0 and 1. In an extreme case, each factory connection is one-to-one corresponding, then $w_{i,j,k}$ can only take either value of between 0 or 1.

And $L_{i+1,k}$ is the local carbon emission generated at the (i+1)-th layer of the k-th factory including direct and indirect emission, these values are collected and recommended by the Assistant AI module **103** during the user input phase. When accounting the GHG emission value, only upstream value excepting the source and transportation, is accounted. The source and the upstream transportation carbon footprint is calculated through the propagation of $G_{i,j}$ and $d_{i,j,k}$ in the network.

The value $d_{i,j,k}$ is calculated by the distance estimated API module **102** with some different possible routes. Different routes may use different shipping or transportation methods and each transit method release different amount of carbon footprint. The total carbon footprint can be automatically computed by the calculation module **101** using the distance of the suggested path (or restriction imposed by the user) and the corresponding emission factor from the emission factor database **104.**

Similarly, one can propagate the cost of factory operation from one layer to the next layer:

$$C_{i+1,k} = \sum_j w_{i,j,k} C_{i,j} + c_{i+1,k} \qquad (4)$$

Where $C_{i,j}$ is the total cost of factory operation accumulated at the i-th layer of the j-th factory. $c_{i+1,k}$ is the local financial cost spend in the operation at the (i+1)-th layer of the k-th factory.

Taking the balance between the carbon footprint emission and the financial cost of operation, we are interested in minimizing the objective function:

$$\min_{w}(G_I + \lambda C) \tag{5}$$

Where $G_I$ is the cradle to gate carbon emission accumulated from the operating of the factory flowing through the network till the final I-th layer. A single subscript used in the final layer to focus on a single factory as the final output. In case multiple factories require for the final output, one can extend one more layer to connect these factories to the next layer.

$\lambda$ is the cost-to-carbon-emission coefficient with value greater or equal to zero. It measures how important one user considers the financial cost over the carbon emission. A zero value indicates ignoring any potential high financial cost completely. The magnitude of $\lambda$ also depends on the currency exchange rate used.

C denotes the total financial cost for the chosen routes, with an addition of carbon reduction cost given by the following equation:

$$C = C_I + \theta g \tag{6}$$

Where $\theta$ is the additional cost per unit carbon reduction, and g is the target carbon footprint to be reduced that satisfy the target constraint:

$$G - g \leq \Phi \tag{7}$$

And $\Phi$ is the maximum net carbon emission to be emitted from a product throughout its lifecycle defined by the company.

The set of the objective and constraint equations, eqs. 5, 2, 3, and 7 formulate a linear programming problem which can be solved by the standard technique. In case the weight constraint of eq. 2 is restricted to only single output per factory (i.e. $w_{i,j,k}$ can only take value of either 0 or 1), the problem becomes a integer linear programming problem. Since the logistic network is only a few layer usually, a brute force looping to try for all possible $w_{i,j,k}$ value is possible to optimize the objective function stated in eq. 5

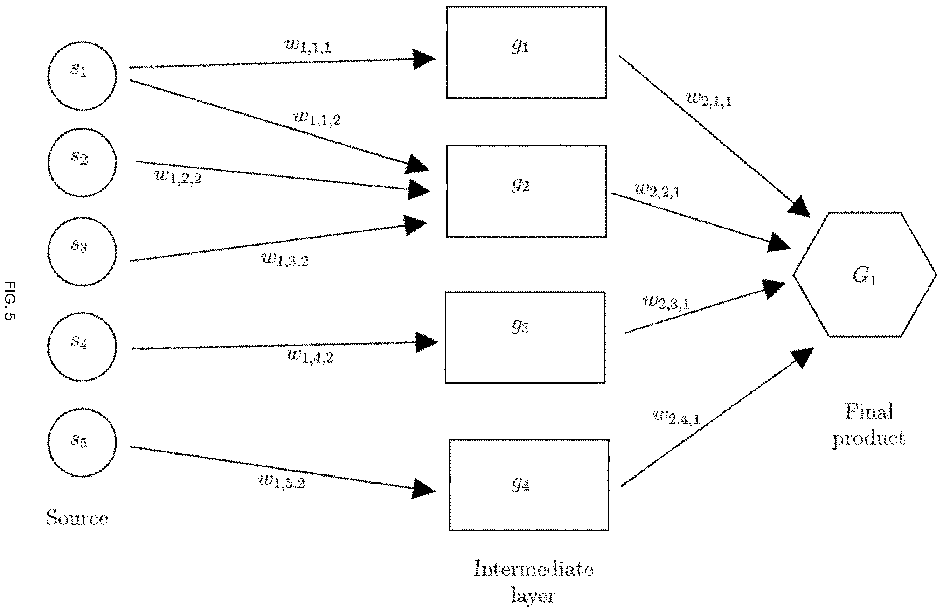

After an optimized weight calculation, $G_I$ in eq. 5 can be used as a function to calculate the carbon footprint percentage generated by a certain process or raw material to find the potential in further reducing the total carbon emission. As an illustration, consider a product life cycle network with 3 layers in total shown in FIG. 5. The corresponding non-zero weight is represented by the w in the figure. The percentage of the carbon footprint of the source $s_1$ to the intermediate product $g_2$ is given by the equation:

$$\text{Percentage of carbon footprint} = w_{1,1,2} \frac{s_1}{g_2} \times 100\%$$

This percentage calculation can be a further chain for multiple layers to compare the significant of the carbon footprint by multiply the corresponding weighting. As an example, consider the carbon footprint of $s_1$ to the final product $G_1$:

$$\text{Percentage of carbon footprint} = \left( w_{1,1,1} \frac{s_1}{g_1} \times w_{2,1,1} \frac{g_1}{G1} + w_{1,1,2} \frac{s_1}{g_2} \times w_{2,2,1} \frac{g_2}{G1} \right) \times 100\%$$

$$= \left( w_{1,1,1} \times w_{2,1,1} + w_{1,1,2} \times w_{2,2,1} \right) \frac{s_1}{G1} \times 100\%$$

Output of the optimized solution includes information of the total carbon footprint, financial cost, and the time to produce the product from scratch. The output can be further used to calculate the main root of high carbon footprint/ financial cost/ time when applicable. All the information can be represented by, but not limited to, charts and tables.

In some cases, an optimized solution solves by eq. 5 may not fit the business need. For example, the transportation time maybe too long to meet the downstream requirement, or after calculation the company fond that one of the factories is not possible to operate. In either case, the user can disable one of the factory nodes from the UI module **100** and recalculate a new path.

# EP 4 592 919 A1

**Claims**

1. A system to calculate a carbon footprint for a product life cycle, comprising:

   a user interface for a user to input information;
   a calculation module to calculate and optimize the carbon footprint for an input network;
   a distance estimate interface for calculating a route distance between factories; and
   an assistant AI component for an intelligent guide to the user inputting and caching data.

2. The system of claim 1, wherein said calculation module is based on a calculation method for a construction of a network propagation.

3. The system of claim 2, wherein said calculation module can perform a route optimization based on the carbon footprint and a financial cost constraint.

4. The system of claim 2, wherein said calculation module can be a further constraint to network node weights by a user input to fix logistic paths during operation.

5. The system of claim 1, wherein said distance estimate interface performs multi-route finding, wherein routes comprise mixing classes of shipping and vehicle assets.

6. The system of claim 5, further comprising:

   finding a distance, time travel, and financial cost for each vehicle mode corresponding to each of the routes.

7. The system of claim 1, wherein said assistant AI component comprises a memory database for automatically filling up of historical data, including a factory node and a corresponding local carbon footprint.

8. The system of claim 1, wherein said assistant AI component performs an analysis of market information and reports to provide recommendations on different methods and parameters to the user.

9. The system of claim 8, further comprising:
   using a programmed logic to request the user for inputting necessary data from most accurate to less accurate based on available data from the user.

10. A method for calculating a carbon footprint for a product life cycle comprising:

    inputting information by a user through a user interface;
    calculating and optimizing the carbon footprint for an input network through a calculation module;
    calculating a route distance between factories through a distance estimate interface; and
    inputting and caching data by the user with an intelligent guide through an assistant AI component.

11. The method of claim 10, wherein said calculation module is based on a calculation method for a construction of a network propagation, can perform a route optimization based on the carbon footprint and a financial cost constraint, and can be a further constraint to network node weights by a user input to fix logistic paths during operation.

12. The method of claim 10, wherein said distance estimate interface performs a multi-route finding, wherein routes comprise mixing classes of shipping and vehicle assets.

13. The method of claim 12, further comprising finding a distance, time travel, and financial cost for each vehicle mode corresponding to each of the routes.

14. The method of claim 10, wherein said assistant AI component comprises a memory database for automatically filling up of historical data, including a factory node and a corresponding local carbon footprint, and wherein said assistant AI component performs an analysis of market information and reports to provide recommendations on different methods and parameters to the user.

15. The system of claim 14, further comprising using a programmed logic to request the user for inputting necessary data from most accurate to less accurate based on available data from the user.

FIG. 1

FIG. 2

FIG. 3

$1^{st}$ layer
Source
300

$2^{nd}$ - $(I-1)^{th}$ layer
Intermediate factory
301

$I^{th}$ layer
Final manufacturer
302

$$G_{i,1}$$

$$G_{i,2}$$

$$G_{i,n}$$

$$G_{i+1,1}$$

$$G_{i+1,m}$$

$$d_{i,2,m}$$

$$d_{i,1,m}$$

$$d_{i,n,m}$$

Input

400

Output

401

FIG. 4

FIG. 5

Europäisches
Patentamt

European
Patent Office

Office européen
des brevets

# EUROPEAN SEARCH REPORT

**Application Number**

EP 24 15 4224

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/186231 A1 (KRONSTADT ANDREW S [US] ET AL) 15 June 2023 (2023-06-15) <br> * paragraphs [0004] - [0006] * <br> * paragraphs [0022] - [0034]; figures 1,2 * <br> * paragraphs [0046] - [0057]; figure 3 * <br> * paragraph [0060] * <br> * paragraphs [0065] - [0067]; figure 5 * <br> * paragraphs [0071] - [0073]; figure 7 * | 1-15 | INV. <br> G06Q10/0639 <br> G06Q10/0835 |
| A | CN 111 144 601 A (BEIJING JINGDONG SHANGKE INFORMATION TECHNOLOGY CO LTD ET AL.) 12 May 2020 (2020-05-12) <br> * abstract * <br> * paragraphs [0066] - [0092]; figure 1 * | 1-15 | |
| A | CARLA PIERAGOSTINI ET AL: "On process optimization considering LCA methodology", JOURNAL OF ENVIRONMENTAL MANAGEMENT, ELSEVIER, AMSTERDAM, NL, vol. 96, no. 1, 24 October 2011 (2011-10-24), pages 43-54, XP028356782, ISSN: 0301-4797, DOI: 10.1016/J.JENVMAN.2011.10.014 [retrieved on 2011-11-05] <br> * the whole document * | 2,4,7-9, 11,14,15 | **TECHNICAL FIELDS SEARCHED (IPC)** <br><br> G06Q |
| A | CN 117 217 965 A (YOUWEI TECH SHENZHEN CO LTD) 12 December 2023 (2023-12-12) <br> * paragraphs [0053] - [0098]; figure 1 * | 2,4,7-9, 11,14,15 | |

The present search report has been drawn up for all claims

| Place of search | Date of completion of the search | Examiner |
|---|---|---|
| Munich | 20 June 2024 | Dedek, Frédéric |

EPO FORM 1503 03.82 (P04C01)

**EP 4 592 919 A1**

## ANNEX TO THE EUROPEAN SEARCH REPORT
## ON EUROPEAN PATENT APPLICATION NO.

EP 24 15 4224

This annex lists the patent family members relating to the patent documents cited in the above-mentioned European search report.
The members are as contained in the European Patent Office EDP file on
The European Patent Office is in no way liable for these particulars which are merely given for the purpose of information.

20-06-2024

| Patent document cited in search report | Publication date | Patent family member(s) | Publication date |
|---|---|---|---|
| US 2023186231 A1 | 15-06-2023 | NONE | |
| CN 111144601 A | 12-05-2020 | NONE | |
| CN 117217965 A | 12-12-2023 | NONE | |

EPO FORM P0459

For more details about this annex : see Official Journal of the European Patent Office, No. 12/82